# EUROPEAN PATENT APPLICATION

(11) **EP 1 813 522 A1**
(43) Date of publication of application: **01.08.2007**
(21) Application number: 06101046.8
(22) Date of filing: 30.01.2006
(51) Int. Cl.: B62K 25/04

(54) **Vibration-damping device for vehicles**

(71) Applicant: Li Mao-Shun, 608 Chiai, Taiwan (TW)
(72) Inventor: Li Mao-Shun, 608 Chiai, Taiwan (TW)
(74) Representative: Hellmich, Wolfgang

(57) **Abstract**

The present invention relates to a vibration-damping device for vehicles. More particularly, the present invention comprises a main frame, and a wheel frame linking with the main frame. The main frame and the wheel frame link together by at least one vibration-damping device. The vibration-damping device includes at least one or multiple layers of a damping board with high-tension plastic materials. Moreover, one end of the damping board is fixed with the main frame. The other end of the single or multiple-layer damping board is fixed with the wheel frame. The high elasticity from the damping board can achieve an anti-vibration effect for the main frame. Further, the discomfort caused from fast vibration can be reduced, and people sitting on the main frame can feel comfortable.

## Description

The present invention is directed to a vibration-damping device for vehicles. The damping board with high elasticity is designed to link the main frame for people to sit and the wheel frame for running on the ground. Further, the damping board is composed of one single or multiple layers. Therefore, the damping board can reduce vibration for people to feel more comfortable when sitting.

Some conventional electrical vehicles or wheelchairs mainly comprise a main frame for people to sit, and wheels for running on the ground, as seen from some published patents. In order to avoid the vehicle running on the ground with a severe vibration and a hard-hit, most vehicles have some buffer mechanisms with anti-vibration capacity. Moreover, the mechanisms mostly have a vibration-damping device linking the main frame and the wheel frame. When wheel frame vibrates caused from the rough surface, the vibration-damping device can absorb the energy as well as reduce the vibration of the main frame. Moreover, the discomfort of people sitting on the main frame is reduced.

However, the above mentioned different types of anti-vibration mechanisms for vehicles mainly use a spring in vibration damping devices. The spring is one element in the vibration-damping device. Most vibration-damping devices wish to have both enough loading and excellent elasticity. If only one advantage can exist, generally the proper loading capacity is selected, and the soft elasticity is sacrificed. Therefore, the effect of vibration being absorbed is reduced. The rough surface makes the wheel frame have vibration energy. Most energy is absorbed by the spring, but some energy still cannot be efficiently lessened. As a result, people sitting on the wheelchair still feel discomfort.

In order to avoid inflexibility and discomfortability of the vibration-damping device in vehicles, the present invention is proposed. The present invention provides a main frame and a wheel frame with rollers for running on the ground. The high tension elastic damping board links the main frame and wheel frame, and also has a pre-set distance. Further, the damping board can be composed of one single piece or stacked multiple pieces.

One of the preferred embodiments in the present invention is the vibration damping board composed of multiple layers. Each layer of the damping board is stacked with the other from top to bottom by an increased length.

The middle between layers of the damping board in the present invention has a cushion.

By using a high elastic effect of the damping board with a pre-set length, the damping board can absorb majority of the vibration energy from the wheel frame during running on the rough ground. Further, the anti-vibration effect is obvious to be achieved for the main frame. The structure of vibration damping board can obtain a soft buffer effect. Therefore, people sitting on the main frame can feel comfortable.

The number of stacked layers from the top to the bottom in the damping board of the vibration-damping device, the distance between the main frame and wheel frame can be adjusted by the loading of the main frame and carrier. It not only can keep a soft vibration absorbing effect, but also can obtain a high loading capacity.

The present invention can be best understood through the following description and accompanying drawings wherein:
Figure 1 is a 3-D diagram showing an electrical vehicle in the present invention;
Figure 2 is an exploded diagram showing an electrical vehicle in the present invention;
Figure 3 is a side view of an electrical vehicle in the present invention;
Figure 4 is one of the preferred embodiments in the present invention showing a 3-D diagram of a wheelchair;
Figure 5 is another preferred embodiment in the present invention showing a cross-sectional view of a wheelchair.

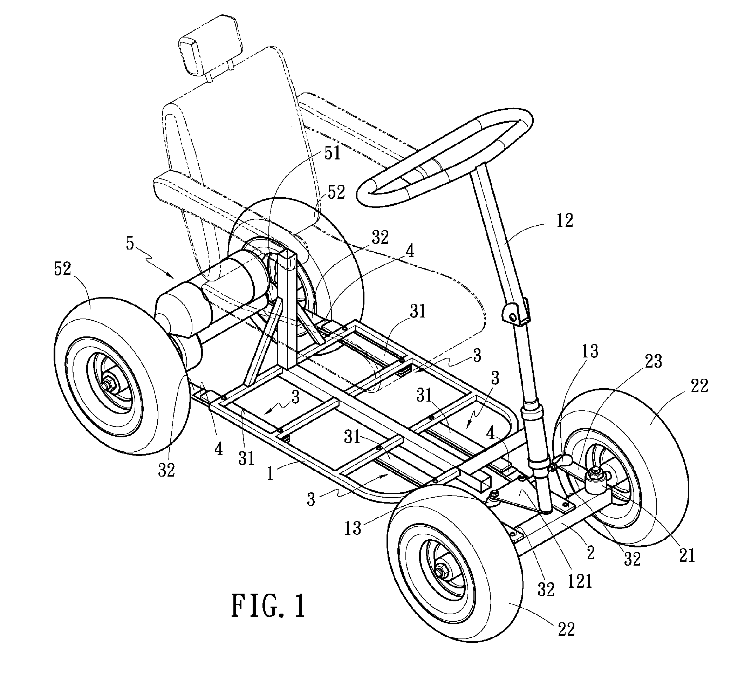

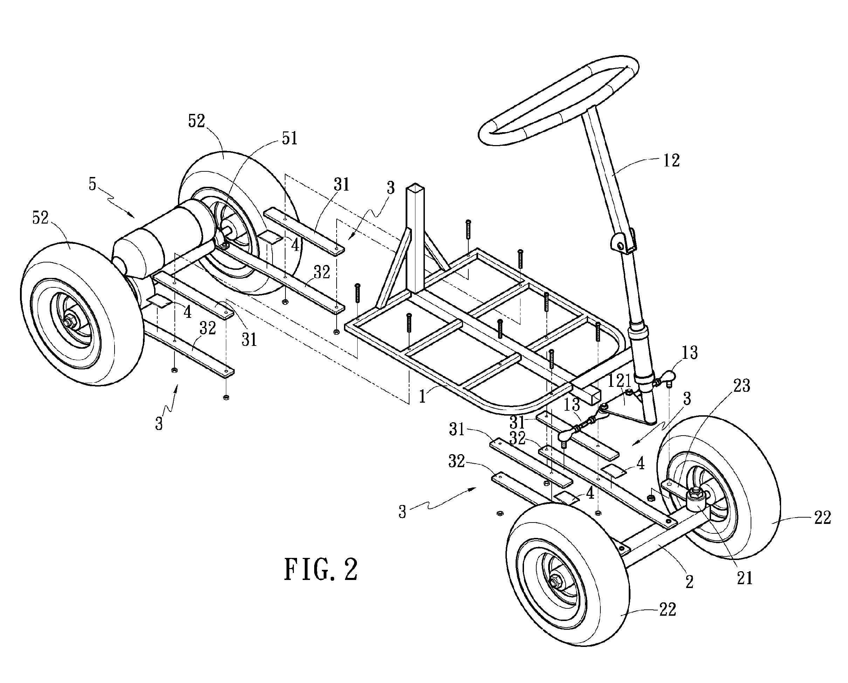

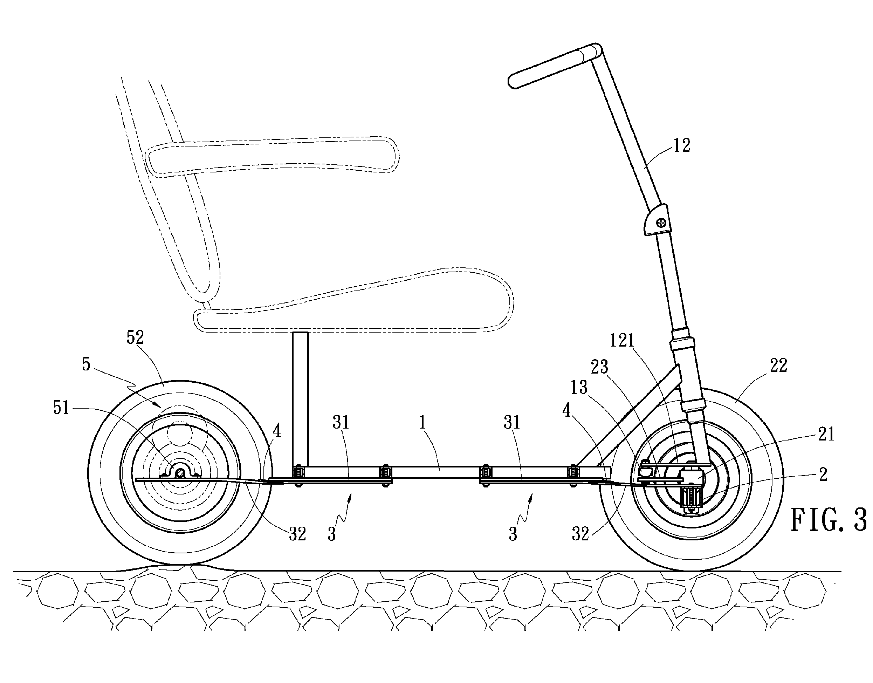

Please refer to Figure 1, Figure 2, and Figure 3. Figures are the preferred embodiments showing the vibration-damping devices assembled with the electrical vehicles. The present invention comprises: a main frame (1) having a chair (11) for people to sit; the front end of the main frame (1) having a handle bar (12); the lower side of the handle bar (12) having a plate (121) rotary with the handle bar (12); both sides of the plate (121) linking with one end of the link (13); both sides of the main frame (1) fixed with a high tension elastic damping board (31) by a two-piece stack for the vibration damping device (3); the free end in the upper damping board (31) extending to outside of the main frame (1); and the lower of the damping board (32) extending to outside much longer; the end of the longer damping board fixed with the front wheel frame (2); and the middle between the upper and the lower of the damping board (31 and 32) having a cushion (4) with soft materials.

Both sides of the front wheel frame (2) have a free-rotary bush (21). Both sides of the bush (21) each have a roller (22). More, both sides of bush (21) each have a plate (23). Each end in the said link (13) individually links with both sides of the plate (23). Therefore, when the handle bar (12) rotates with a left-right movement, the both sides of the wheel (22) can rotate thru a link (13) driving

Both sides in the back of the main frame (1) also have a vibration damping device (3) with an up-down stacked damping board (31 and 32). The end of the longer damping board (32) is fixed with one rear wheel frame (5) (As shown in the Figure, differential is used in the rear wheel frame, and the bearing (51) is fixed with both sides of the damping board (32) and then assembled with the wheel (52) on both sides.

Therefore, while the front and rear wheels (22 and 52) are running on the rough ground, the front and rear wheels (22 and 52) causes a violent bound. Moreover, the front and rear wheel frames (2 and 5) also have a vibration phenomenon. After the vibration energy of the wheel frames (2 and 5) is absorbed by the damping board (31 and 32) of the vibration-damping device (3), the energy which is transferred to the main frame (1) is increasingly reduced. Both ends of the vibration damping device (3) keep a pre-set distance. Therefore, the degree of vibration is reduced for a soft buffer effect. People sitting on the main frame (1) can feel soft and comfortable.

The number of the stacked layers from the top to the bottom in the damping board (31 and 32) of the vibration-damping device, the distance between the main frame (1) and wheel frame (2 and 5) can be adjusted by the loading of the main frame (1) and carrier. It not only can keep a soft vibration absorbing effect, but also can obtain a high loading capacity.

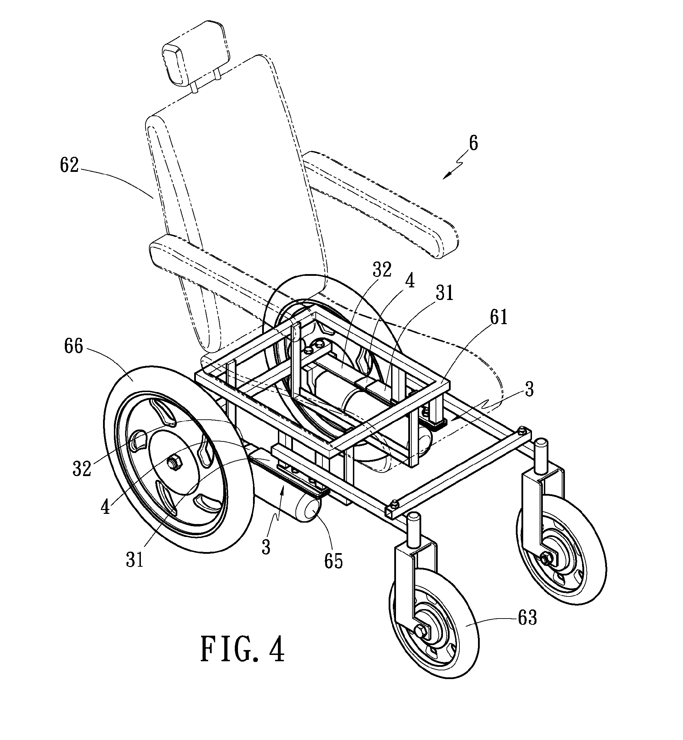

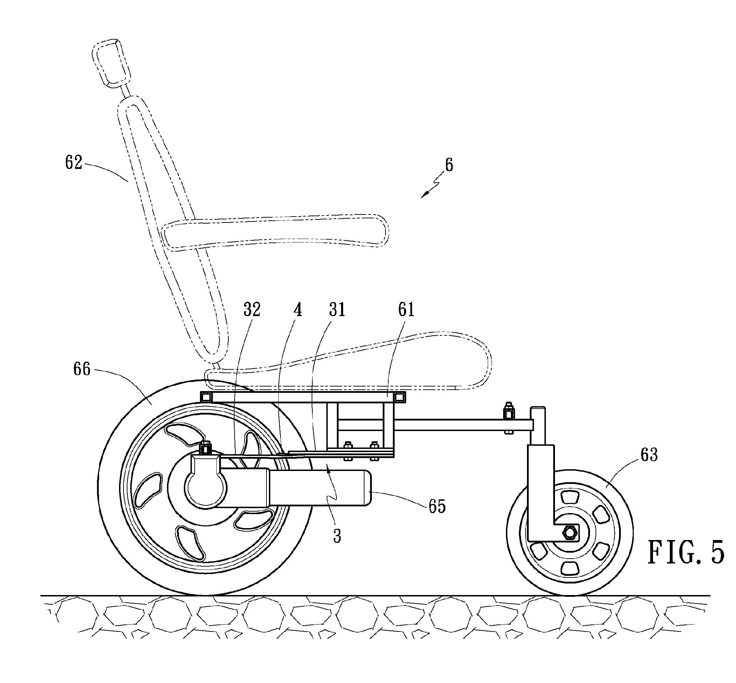

Please refer to Figure 4 and Figure 5. The vibration-damping device of the present invention can also be assembled with the wheelchair (6).The main frame (61) of the wheelchair can have a seat part (62). Moreover, both sides in the front end of the main frame (61) have a wheel (63). Further, both sides in the lower side of the main frame (61) have said vibration-damping device (3) with a damping board (31 and 32) by a two-piece stack. The other end on both sides of the vibration-damping device (3) is fixed with the rear wheel frame (64). Besides, both sides of the rear wheel frame (64) further have an actuator (65). One end of the running axis in the actuator (65) has a wheel (66). While vibration is caused from the wheel (66) during running on the rough ground, vibration can be absorbed by the damping boards (31 and 32), which is similar to the above condition. Therefore, people sitting on the wheelchair can feel comfortable.

While the invention has been particularly shown and described with reference to the preferred embodiments thereof, these are, of course, merely examples to help clarify the invention and are not intended to limit the invention. It will be understood by those skilled in the art that various changes, modifications, and alterations in form and details may be made therein without departing from the spirit and scope of the invention, as set forth in the following claims.

## Claims

1. A vibration-damping device for vehicles, comprising:
a main frame for people to sit;
a wheel frame having rollers; and
a vibration-damping device linking said main frame and said wheel frame;
wherein said vibration-damping device having a damping board with high tension elastic materials;
wherein one end of the damping board fixed with the main frame;
wherein the other end of the damping board keeps a pre-set distance from one end for fixing with the wheel frame.

2. A vibration damping device according to claim 1, wherein said damping board can be composed of one single piece.

3. A vibration damping device according to claim 1, wherein said damping board can be composed of multiple pieces; wherein each piece can be stacked with the other by an increased length; wherein the other end of the longest damping board is fixed with the wheel frame.

4. A vibration-damping device according to claim 3, wherein the middle between layers of the damping board has a cushion with soft materials.
